# EUROPÄISCHE PATENTSCHRIFT

(11) **EP 0 305 850 B1**
(45) Veröffentlichungstag und Bekanntmachung des Hinweises auf die Patenterteilung: **24.06.1998**
(21) Anmeldenummer: 88113656.8
(22) Anmeldetag: 23.08.1988
(51) Int. Cl.: C08F 220/12, C08F 230/02, C09D 133/08, C09D 133/10

(54) **Phosphatgruppen enthaltende wässrige Sekundärdispersionen**
Aqueous secondary dispersions containing phosphate groups
Dispersions aqueuses secondaires contenant des groupes phosphates

(30) Priorität: 29.08.1987 DE 3728992
(43) Veröffentlichungstag der Anmeldung: 08.03.1989
(73) Patentinhaber: BASF Aktiengesellschaft, 67063 Ludwigshafen (DE)
(72) Erfinder: Schwerzel, Thomas, Dr., D-6700 Ludwigshafen (DE); Auchter, Gerhard, Dr., D-6800 Mannheim 31 (DE); Wistuba, Eckehardt, Dr., D-6702 Bad Duerkheim (DE)

(56) Entgegenhaltungen:
- EP-A- 0 225 612
- DE-B- 1 134 836

## Beschreibung

Die vorliegende Erfindung betrifft eine Verwendung von Phosphatgruppen enthaltende wäßrige Sekundärdispersionen auf Basis von Acrylat-Copolymerisaten. Für den Vertragstaaten AT CH ES LI betrifft die vorliegende Erfindung auch die Phosphatgruppen-enthaltende wäßrige Sekundärdispersion als solche.

Emulgatorfreie wäßrige Sekundärdispersionen sind bekannt und werden aus Carboxylgruppen enthaltenden Copolymerisaten durch teilweise oder vollständige Neutralisation der Carboxylgruppen mit Ammoniak, Aminen oder Alkalihydroxiden und anschließende Dispergierung in Wasser hergestellt. So wird z.B. in der DE-OS 35 43 361 ein Verfahren zur Herstellung wäßriger Polymerdispersionen beschrieben, durch Copolymerisation eines Esters der Acryl- oder Methacrylsäure mit copolymerisierbaren olefinisch ungesättigten Verbindungen mit mindestens einer Carboxyl- oder Carbonsäureanhydridgruppe und gegebenenfalls weiteren copolymerisierbaren olefinisch ungesättigten Verbindungen, nachfolgende Copolymerisation weiterer Komponenten, Dispergierung der entstandenen Mischung unter Zusatz von Ammoniak in Wasser und gegebenenfalls Abdestillation des Lösungsmittels.

Diese elektrostatisch stabilisieren Sekundärdispersionen sind im allgemeinen in Gegenwart von mehrwertigen Kationen wenig stabil und neigen zur Koagulation. Deshalb wurde bis jetzt die Verwendung von sogenannten aktiven Korrosionsschutzpigmenten wie Zinkphosphat, die durch Dissoziation im wäßrigen Medium z.B. Zn²⁺-Ionen bilden, verhindert.

Aus der WO 88/02382 sind Phosphorsäuren enthaltende, polymere Dispergierhilfsmittel bekannt. Die EP-A-221 498 betrifft Primärdispersionen von Alkylphosphat enthaltenden Copolymeren.

Aufgabe der vorliegenden Erfindung war es, Sekundärdispersionen zur Verfügung zu stellen, die auch in Gegenwart von Aktivpigmenten stabil bleiben.

Diese Aufgabe konnte gelöst werden durch Verwendung von wäßrigen Sekundärdispersionen, erhältlich durch Copolymerisation in organischen Lösungsmitteln von
(A) 25 - 98 Gew.% Acrylsäure- und/oder Methacrylsäureestern sowie
(B) 1 - 10 Gew.% Acryl- und/oder Methacrylsäure und
(C) 1 - 8 Gew.% einer Verbindung mit der allgemeinen Formel 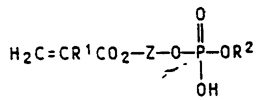 worin R¹, R² Wasserstoff- und/oder C₁-bis C₈-Kohlenwasserstoffrest und Z eine gegebenenfalls verzweigte C₁- bis C₈-Alkylengruppe bedeuten, sowie
(D) 0 - 60 Gew.% einer copolymerisierbaren olefinisch ungesättigten Verbindung,
   Neutralisation der Copolymer-Lösung und Verdünnen mit Wasser sowie gegebenenfalls Abdestillation von Lösemittel, als Bindemittel für Anstrichmittel.

Als Komponente (A) können Ester der Acryl- und/oder Methacrylsäure mit 1 bis 20 Konlenstoffatome enthaltenden geradkettigen oder verzweigten Alkoholen verwendet werden, wie Methyl-, Ethyl-, Isopropyl-, Methylmeth-, n-Butyl-, n-Butylmeth-, Isobutyl-, Isobutylmeth-, tert.-Butyl-, 2-Ethylhexyl-, 2-Ethylhexylmeth- und Laurylacrylat sowie deren Gemische. Bevorzugt sind n-Butyl- und Methylmethacrylat. Die Komponente (A) wird in einer Menge von 25 bis 98 Gew.%, bevorzugt 25 bis 60 Gew.%, eingesetzt.

Als Komponente (B) wird Acryl- und/oder Methacrylsäure in einer Menge von 1 bis 10 Gew.%, bevorzugt 2 bis 7 Gew.%, verwendet.

Als Komponente (C) werden beispielsweise Monoester der Phosphorsäure mit Verbindungen, die aus Diolen und Acrylsäure oder Methacrylsäure durch Einfachveresterung erhältlich sind, verwendet, wie 2-Hydroxyethylmethacrylat, Hydroxypropyl(meth)acrylat, 4-Hydroxybutylacrylat und 2-Hydroxybutylacrylat.

Bevorzugt wird 2-Hydroxybutyl(meth)acrylat verwendet.

Die Komponente (C) wird in einer Menge von 1 bis 8 Gew.%, bevorzugt 2 bis 6 Gew.% verwendet.

Bei der Komponente (D) handelt es sich um weitere unter (A) bis (C) nicht genannte copolymerisierbare olefinisch ungesättigte Verbindungen. Es sind dies beispielsweise Mono(meth)acrylate von Diolen, wie Hydroxyethylacrylat und Hydroxypropyl(meth)acrylat sowie Butandiolmono(meth)acrylat, (Meth)acrylamid und/oder (Meth)acrylnitril. Diese Monomeren können, falls erforderlich, zur Einstellung spezieller Eigenschaften dienen.

Als Komponente (D) können mitverwendet werden:

Vinylaromaten wie Styrol und Vinyltoluol, Vinylether, Vinylester, Diester der Maleinsäure, Itaconsäure, Citraconsäure oder Mesaconsäure mit, gegebenenfalls Ether- oder Thioether-Gruppen enthaltenden, Monoalkonolen mit 1 bis 20 Kohlensoffatomen. Weiterhin können als Komponente (D) Monoolefine mit 3 bis 20 Kohlenstoffatomen wie Propen, Buten, Penten, Hexen, Isobuten und Diolefine wie Butadien und Isopren verwendet werden.

Es ist bekannt, daß polare funktionelle Gruppen, wie sie in Komponente (D) enthalten sein können, z.B. Hydroxy- oder Ethergruppen, Polymerdispersionen zusätzlich stabilisieren. Die erfindungsgemäßen Dispersionen benötigen jedoch eine solche zusätzliche Stabilisierung nicht. In Komponente (D) enthaltende polare Gruppen können jedoch die Wasserfestigkeit der aus den erfindungsgemäßen Dispersionen erhaltenen Filme ungünstig beeinflussen. In der bevorzugten Ausführungsform der Erfindung wird Komponente (D) nicht mitverwendet. Bei der Mitverwendung der Komponente (D) haben sich 20 bis 60 Gew.% Vinylaromaten bewährt.

Die Summe der unten (A) bis (D) genannten Prozentzahlen ist 100.

Das Verfahren der Lösungspolymerisation ist dem Fachmann bekannt, so daß auf die für die jeweiligen Aufbaukomponenten geeigneten Bedingungen hier nicht mehr eingegangen zu werden braucht. Die Polymerisation erfolgt zweckmäßigerweise in Gegenwart von 0,3 bis 5,0, bezogen auf die Summe der Monomeren (A) bis (D), radikalbildenden Initiatoren wie Azo-bis-carbonsäureamiden, Azo-bis-carbonsäurenitrilen oder Peroxiden, im allgemeinen bei Temperaturen zwischen 50 und 150°C, vorzugsweise zwischen 80 und 130°C, gegebenenfalls in Gegenwart von Reglern wie Mercaptoethanol, tert.-Dodecylmercaptan oder Diisopropylxanthogendisulfid, die in Mengen von 0 bis 3 Gew.%, bezogen auf die Summe der Monomeren (A) bis (D), vorhanden sein können. Als organische Lösemittel kommen die in der Lacktechnologie gebräuchlichen Lösemittel, die das erfindungsgemäße Polymerisat lösen, in Betracht. Ein Gehalt an Lösemittel ist für die Stabilisierung und die positiven Anwendungseigenschaften der erfindungsgemäßen Dispersionen nicht erforderlich und es ist daher aus Gründen des Umweltschutzes sinnvoll, den Gehalt an Lösemittel möglichst klein zu wählen. Zweckmäßigerweise werden Lösemittel verwendet, die sich aufgrund ihres Siedepunktes und/oder Azeotropbildung mit Wasser leicht aus den erfindungsgemäßen Dispersionen abdestillieren lassen. Besonders bevorzugt sind Butanol, Isobutanol, Propanol, Ethanol sowie Methylisobutylketon, Toluol und Xylol.

Die Copolymerisatlösungen werden entweder durch Zumischen von wäßriger Ammoniak-Lösung und Verdünnen mit Wasser in Dispersionen oder Lösungen überführt, oder man rührt die Copolymerisatlösung langsam in eine wäßrige Ammoniaklösung ein und erhält dadurch eine Dispersion oder Lösung. Lösemittel wird gegebenenfalls destillativ, vorzugsweise durch Vakuum-Destillation aus den Dispersionen entfernt, wobei das Lösemittel zurückgewonnen werden kann.

Für jedes Säureäquivalent des Copolymerisates werden 0,1 bis 1,5, vorzugsweise 0,15 bis 1,0, besonders bevorzugt 0,4 bis 1,0, Äquivalente Base als Neutralisationsmittel zugesetzt. Der pH-Wert der Dispersionen kann demnach zwischen etwa 6,8 und 10, vorzugsweise zwischen 7,0 und 9, betragen. Von dem als Neutralisationsmittel dienenden Ammoniak kann - zur Erzielung spezieller Effekte - ein geringer Teil, zweckmäßig nicht mehr als 25 Gew.%, vorzugsweise nicht mehr als 10 Gew.%, des für die Neutralisation erforderlichen Ammoniaks, durch organische Amine, insbesondere Triethylamin oder Dimethylethanolamin, ersetzt werden. Solche Zusätze können die Wasserquellbarkeit und die Wasserdurchlässigkeit der Anstriche erhöhen.

Der Polymerisatgehalt der Dispersionen wird zweckmäßigerweise so gewählt, daß sich eine für den Verarbeiter günstige Viskosität ergibt. Der Polymerisatgehalt beträgt im allgemeinen 40 bis 60 Gew.%, vorzugsweise 45 bis 55 Gew.%.

Die hergestellten Dispersionen können als alleinige Bindemittel zur Herstellung der Anstrichstoffe dienen. Zur Einarbeitung von Pigmenten und Füllstoffen sind keine Dispergierhilfsstoffe erforderlich, wie sie zur Herstellung von üblichen Dispersionsanstrichstoffen benötigt werden. Die Dispersionen lassen sich durch einfaches Unterrühren der Pigmente und Füllstoffe pigmentieren. Für die Herstellung von Anstrichstoffen können übliche Pigmente und Füllstoffe wie Titandioxid, Eisenoxide, Chromoxide, Bariumsulfat, Ruß, Calcite, Dolomit, Talkum, Aluminiumbronze und organische Pigmente und bevorzugt Aktivpigmente wie Zinkphosphat, Zinkmolybdänphosphat, Zinkborat und Zinkchromat mitverwendet werden. Aber auch andere in der Lacktechnologie übliche Hilfsstoffe wie Entschäumer, Netzmittel, Antiabsetz- bzw. Thixotropiermittel, Verdicker, Gleitmittel und Weichmacher können mitverwendet werden.

Mit den Sekundärdispersionen hergestellte Überzugs- und Anstrichmittel sind nach üblichen Methoden verarbeitbar, wie durch Streichen, Spritzen, Rollen, Gießen, Tauchen und Walzen. Beispiele für die Anwendung der Produkte sind pigmentierte Anstrichstoffe zum Schutz verschiedenartiger Substrate wie von Stahl, verzinktem Eisen oder anderen Metallen wie Zink oder Aluminium.

### Beispiel 1

173 g Isobutanol wurden unter Rühren auf 100°C erwärmt. Es wurde in 30 Minuten eine Mischung aus 90 g Styrol, 102 g n-Butylacrylat, 36 g Acrylsäure, 12 g Ester aus 1 Mol Hydroxyethylmethacrylsäureester und 1 Mol Ortho-Phosphorsäure, 2,9 g tert.-Butylperoctoat in 5,8 g Isobutanol zugetropft. Die Temperatur wurde noch weitere 45 Minuten bei 100°C gehalten. Innerhalb von 3 Stunden wurde dann eine Mischung von 174 g Styrol, 186 g n-Butylacrylat, 3,6 g tert.-Butylperoctoat und 7,2 g Isobutanol zugetropft. Es wurde nochmals 7,2 g tert.-Butylperoctoat in 14,4 g Isobutanol zugegegen und anschließend mit 200 g Isobutanol verdünnt. Es wurde mit 50 g konzentrierter wäßriger Ammoniak-Lösung uns danach mit 450 g Wasser versetzt. Während einer Vakuumdestillation (60°C bei 50 mbar) wurden weitere 760 g Wasser zulaufen gelassen.
- Feststoffgehalt:: 46 Gew.%

### Beispiel 2

173 g Isobutanol wurden unter Rühren auf 100°C erwärmt. Es wurde in 30 Minuten eine Mischung aus 96 g Styrol, 108 g n-Butylacrylat, 24 g Acrylsäure, 12 g Ester aus 1 Mol Hydroxyethylmethacrylsäureester und 1 Mol Ortho-Phosphorsäure, 2,9 g tert.-Butylperoctoat und 5,8 g Isobutanol zugetropft. Die Temperatur wurde noch weitere 45 Minuten bei 100°C gehalten. Innerhalb von 3 Stunden wurde dann eine Mischung von 174 g Styrol, 186 g n-Butylacrylat, 3,6 g tert.-Butylperoctoat und 7,2 g Isobutanol zugetropft. Es wurde 7,2 g tert.-Butylperoctoat in 14,4 g Isobutanol zugegeben und anschließend mit 123 g Isobutanol verdünnt. Es wurde mit 36,4 g konzentriertem Ammoniak und danach mit 424 g Wasser versetzt. Während einer Vakuumdestillation (60°C bei 50 mbar) wurden weitere 760 g Wasser zulaufen gelassen.
- Feststoffgehalt:: 40 Gew.%

### Vergleichsbeispiel

173 g Isobutanol wurden unter Rühren auf 100°C erwärmt. Es wurde in 30 Minuten eine Mischung aus 96 g Styrol, 108 g n-Butylacrylat, 36 g Acrylsäure, 2,9 g tert.-Butylperoctoat und 5,8 g Isobutanol zugetropft.

Die Temperatur wurde noch weitere 45 Minuten bei 100°C gehalten. Innerhalb von 3 Stunden wurde dann eine Mischung von 174 g Styrol, 186 g n-Butylacrylat, 3,6 g tert.-Butylperoctoat und 7,2 g Isobutanol zugetropft. Es wurde 7,2 g tert.-Butylperoctoat in 14,4 g Isobutanol zugegeben und anschließend mit 57 g Isobutanol verdünnt. Es wurde mit 40,8 g konzentriertem Ammoniak und danach mit 419 g Wasser versetzt. Während einer Vakuumdestillation (60°C bei 50 mbar) wurden weitere 398 g Wasser zulaufen gelassen.
- Feststoffgehalt:: 46,6 Gew.%

### Beständigkeitsprüfung gegen Aktivpigment:

### Versuch 1:

In 100 g der Dispersion aus Beispiel 1 wurden 30 g Zinkmolybdänphosphat gerührt. Die Probe zeigte auch nach mehrwöchiger Lagerung keine Veränderung.

### Versuch 2:

In 100 g der Dispersion aus Beispiel 2 wurden 30 g Zinkmolybdänphosphat gerührt. Die Probe zeigte auch nach mehrwöchiger Lagerung keine Veränderung.

### Vergleichsversuch

In 100 g Dispersion aus dem Vergleichsbeispiel wurde langsam 30 g Zinkmolybdänphosphat eingerührt. Dabei koagulierte die Dispersion.

## Patentansprüche (Patentansprüche für folgende(n) Vertragsstaat(en): BE, DE, FR, GB, IT, NL, SE)

1. Verwendung von wäßrigen Sekundärdispersionen, erhältlich durch Copolymerisation in organischem Lösungsmittel von
(A) 25 bis 98 Gew.-% Acrylsäure- und/oder Methacrylsäureestern sowie
(B) 1 bis 10 Gew.-% Acryl- und/oder Methacrylsäure und
(C) 1 bis 8 Gew.-% einer Verbindung mit der allgemeinen Formel 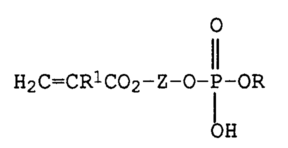 worin R¹, R² Wasserstoff- und/oder C₁- bis C₈-Kohlenwasserstoffrest und Z eine gegebenenfalls verzweigte C₁- bis C₈-Alkylengruppe bedeutet, sowie
(D) 0 bis 60 Gew.-% einer weiteren copolymerisierbaren olefinisch ungesättigten Verbindung,
Neutralisation der Copolymerisat-Lösung und Verdünnen mit Wasser sowie gegebenenfalls Abdestillation von Lösemittel
als Bindemittel für Anstrichmittel.

2. Verwendung nach Anspruch 1, wobei R¹ eine CH₃-Gruppe und R² ein Wasserstoffrest ist.

3. Verwendung nach Anspruch 1 oder 2, wobei es sich bei Komponente (D) um Vinylaromaten handelt.

## Patentansprüche (Patentansprüche für folgende(n) Vertragsstaat(en): AT, CH, ES, LI)

1. Phosphatgruppen enthaltende wäßrige Sekundärdispersionen für Anstrichmittel, erhältlich durch Copolymerisation in organischem Lösungsmittel von
(A) 25 - 98 Gew.% Acrylsäure- und/oder Methacrylsäureestern sowie
(B) 1 - 10 Gew.% Acryl- und/oder Methacrylsäure und
(C) 1 - 8 Gew.% einer Verbindung mit der allgemeinen Formel 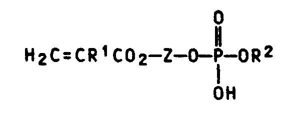 worin R¹, R² Wasserstoff- und/oder C₁- bis C₈-Kohlenwasserstoffrest und Z eine gegebenenfalls verzweigte C₁- bis C₈-Alkylengruppe bedeuten, sowie
(D) 0 - 60 Gew.% einer weiteren copolymerisierbaren olefinisch ungesättigten Verbindung,
Neutralisation der Copolymerisat-Lösung und Verdünnen mit Wasser sowie gegebenenfalls Abdestillation von Lösemittel.

2. Sekundärdispersionen nach Anspruch 1, erhältlich unter Verwendung einer Komponente (C), wobei R¹ eine CH₃-Gruppe und R² ein Wasserstoff-Rest ist.

3. Sekundärdispersionen nach Anspruch 1 oder 2, erhältlich unter Verwendung von Vinylaromaten als Komponente (D).

4. Sekundärdispersionen nach einem der Ansprüche 1 bis 3, erhältlich durch Neutralisation der Copolymerisat-Lösung mit wäßriger Ammoniak-Lösung.

5. Anstrichstoffe, enthaltend die Sekundärdispersionen gemäß einem der Ansprüche 1 bis 4.

## Claims (Claims for the following Contracting State(s): BE, DE, FR, GB, IT, NL, SE)

1. The use of aqueous secondary dispersions, obtainable by copolymerizing, in an organic solvent,
(A) 25 - 98% by weight of acrylic and/or methacrylic esters and
(B) 1 - 10% by weight of acrylic and/or methacrylic acid and
(C) 1 - 8% by weight of a compound of the formula 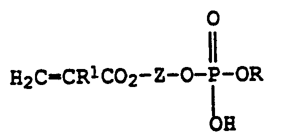 in which R¹, R² are hydrogen and/or a C₁- to C₈-hydrocarbon radical and Z is a linear or branched C₁- to C₈- alkylene group, and
(D) 0 to 60% by weight of a further copolymerizable, olefinically unsaturated compound,
neutralizing the copolymer solution and diluting it with water, and, if desired, removing the solvent by distillation,
as binders for coating materials.

2. The use as claimed in claim 1, where R¹ is a CH₃ group and R² is hydrogen.

3. The use as claimed in claim 1 or 2, where component (D) comprises vinylaromatic compounds.

## Claims (Claims for the following Contracting State(s): AT, CH, ES, LI)

1. An aqueous secondary dispersion, containing phosphate groups, for coating materials, obtainable by copolymerizing, in an organic solvent,
(A) 25 - 98% by weight of acrylic and/or methacrylic esters and
(B) 1 - 10% by weight of acrylic and/or methacrylic acid and
(C) 1 - 8% by weight of a compound of the formula 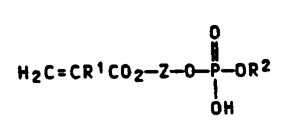 in which R¹, R² are hydrogen and/or a C₁- to C₈-hydrocarbon radical and Z is a linear or branched C₁- to C₈- alkylene group, and
(D) 0 to 60% by weight of a further copolymerizable, olefinically unsaturated compound,
neutralizing the copolymer solution and diluting it with water, and, if desired, removing the solvent by distillation.

2. A secondary dispersion as claimed in claim 1, obtainable using a component (C) for which R¹ is a CH₃ group and R² is hydrogen.

3. A secondary dispersion as claimed in claim 1 or 2, obtainable using vinylaromatic compounds as component (D).

4. A secondary dispersion as claimed in one of claims 1 to 3, obtainable by neutralizing the copolymer solution with aqueous ammonia solution.

5. A coating material comprising a secondary dispersion as claimed in one of claims 1 to 4.

## Revendications (Revendications pour l'(les) Etat(s) contractant(s) suivant(s): BE, DE, FR, GB, IT, NL, SE)

1. Utilisation de dispersions secondaires aqueuses obtenues par copolymérisation dans des solvants organiques de
(A) 25 à 98 % en poids d'esters d'acide acrylique et/ou d'acide méthacrylique ainsi que de
(B) 1 à 10 % en poids d'acide acrylique et/ou méthacrylique et
(C) 1 à 8 % en poids d'un composé de formule générale 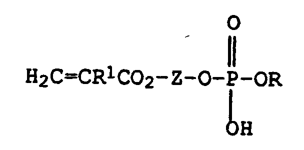 dans laquelle R¹, R² représentent un atome d'hydrogène et/ou un reste hydrocarboné en C₁-C₈ et Z un groupe alkylène en C₁-C₈ éventuellement ramifié, ainsi que de
(D) 0 à 60 % en poids d'un autre composé à insaturation éthylénique copolymérisable,
neutralisation de la solution de copolymère et dilution avec de l'eau ainsi qu'éventuellement élimination du solvant par distillation, comme liants pour produits d'enduction.

2. Utilisation selon la revendication 1, dans laquelle R¹ est un groupement CH₃ et R² est un reste hydrogène.

3. Utilisation selon la revendication 1 ou 2, dans laquelle il s'agit pour le composant (D) de composés vinylaromatiques.

## Revendications (Revendications pour l'(les) Etat(s) contractant(s) suivant(s): AT, CH, ES, LI)

1. Dispersions secondaires, contenant des groupements phosphates, pour produits d'enduction, obtenues par copolymèrisation dans des solvants organiques de
(A) 25 à 98 % en poids d'esters d'acide acrylique et/ou d'acide méthacrylique ainsi que de
(B) 1 à 10 % en poids d'acide acrylique et/ou méthacrylique et
(C) 1 à 8 % en poids d'un composé de formule générale 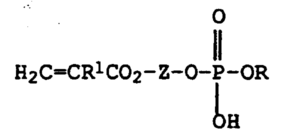 dans laquelle R¹, R² représentent un atome d'hydrogène et/ou un reste hydrocarboné en C₁-C₈ et Z un groupe alkylène en C₁-C₈ éventuellement ramifié, ainsi que de
(D) 0 à 60 % en poids d'un autre composé à insaturation éthylénique copolymérisable,
neutralisation de la solution de copolymère et dilution avec de l'eau ainsi qu'éventuellement élimination du solvant par distillation.

2. Dispersions secondaires selon la revendication 1, obtenues en utilisant un composant (C) dans lequel R¹ est un groupe CH₃ et R² un reste hydrogène.

3. Dispersions secondaires selon la revendication 1 ou 2, obtenues en utilisant comme composant (D) des composés vinylaromatiques.

4. Dispersions secondaires selon l'une quelconque des revendications 1 à 3, obtenues par neutralisation de la solution de copolymère par une solution aqueuse d'ammoniac.

5. Produit d'enduction contenant les dispersions secondaires selon l'une des revendications 1 à 4.
